# FASCICULE DE BREVET EUROPEEN

(11) **EP 3 407 091 B1**
(45) Date de publication et mention de la délivrance du brevet: **28.07.2021**
(21) Numéro de dépôt: 18173585.3
(22) Date de dépôt: 22.05.2018
(51) Int. Cl.: G01S 17/95, G01S 7/48, G01N 21/17

(54) **DISPOSITIF DE SPECTROSCOPIE À DISTANCE À UNE SOURCE LASER COMPLEXE ET PROCÉDÉ DE SPECTROSCOPIE À DISTANCE ASSOCIÉ**
TELESPEKTROSKOPIEVORRICHTUNG MIT EINER KOMPLEXEN LASERQUELLE, UND ENTSPRECHENDES TELESPEKTROSKOPIEVERFAHREN
REMOTE SPECTROSCOPY DEVICE WITH COMPLEX LASER SOURCE AND ASSOCIATED REMOTE SPECTROSCOPY METHOD

(30) Priorité: 23.05.2017 FR 1754568
(43) Date de publication de la demande: 28.11.2018
(73) Titulaire: Centre National d'Etudes Spatiales, 75001 Paris (FR); Office National d'Etudes et de Recherches Aérospatiales, 91120 Palaiseau (FR)
(72) Inventeur: HÉBERT, Philippe, 31500 Toulouse (FR); LEMAÎTRE, François, 31650 St Orens de Gameville (FR); ORLIK, Xavier, 31320 Pechabou (FR); DARTIGALONGUE, Thibault, 31500 Toulouse (FR)
(74) Mandataire: Verriest, Philippe

(56) Documents cités:
- EP-A2- 1 835 305
- FR-A1- 3 027 116
- FR-A1- 3 039 331
- JP-A- 2004 219 207
- RIDLEY K D ET AL: "Improved speckle statistics in coherent differential absorption lidar with in-fiber wavelength multiplexing", APPLIED OPTICS, OPTICAL SOCIETY OF AMERICA, WASHINGTON, DC; US, vol. 40, no. 12, 20 avril 2001 (2001-04-20), pages 2017-2023, XP002260851, ISSN: 0003-6935, DOI: 10.1364/AO.40.002017

## Description

La présente invention concerne un dispositif de spectroscopie à distance à une source laser complexe.

La présente invention concerne en outre un procédé de spectroscopie à distance mis en œuvre par ce dispositif.

Différents procédés de spectroscopie à distance sont déjà connus dans l'état de la technique. Un exemple d'un tel procédé de spectroscopie est décrit notamment dans la demande FR 3039331. D'autres exemples sont décrits dans JP 2004219207 A, FR 3 027 116, EP 1 835 305 A2 et dans K. D. Ridley et al. "Improved speckle statistics in coherent differential absorption lidar with in-fiber wavelength multiplexing", Applied Optics, Optical Society of America, pages 2017 - 2023, 20-04-2001.

Ce procédé de spectroscopie est dit de type « LIDAR » ce qui signifie qu'il est mis en œuvre par un outil de télédétection et de mesure optique connu sous le terme « LIDAR ». Le terme « LIDAR » provient de l'expression anglaise « light détection and ranging » (ou « détection et mesure par lumière » en français).

En particulier, ce procédé permet d'étudier la composition d'une matière ciblée située à distance du LIDAR en émettant vers cette matière une onde lumineuse d'une fréquence déterminée et puis, en recevant une onde lumineuse réfléchie par cette matière.

Ainsi, en comparant cette onde lumineuse réfléchie avec l'onde initiale ou avec un signal de référence, il est par exemple possible de déterminer le coefficient d'absorption par la matière ce qui permet généralement de déterminer la composition précise de cette matière.

L'onde lumineuse est émise par le LIDAR sous la forme d'un peigne fréquentiel composé généralement d'une pluralité de raies lumineuses. Ces raies sont générées à partir d'un signal laser par un ou plusieurs modulateurs avec une fréquence prédéterminée, en utilisant des méthodes de générations connues en soi. Cette fréquence est choisie notamment en fonction de la finesse d'échantillonnage souhaitée.

Toutes les raies du peigne sont envoyées simultanément vers la matière ciblée, réfléchies par la suite par cette matière et reçues par le LIDAR. Par mélange avec le signal de référence, l'onde lumineuse reçue permet d'obtenir un interférogramme de la matière ciblée. Sa transformée de Fourier fournit alors un spectre de la matière ciblée, c'est-à-dire une composition précise de cette matière.

Chaque onde lumineuse émise permet donc de couvrir un domaine de longueur d'onde prédéterminé par le LIDAR.

Toutefois, pour certaines matières ciblées, le domaine de longueur d'onde des dispositifs de spectroscopie existants, est relativement restreint ce qui ne permet pas d'étudier ces matières de manière suffisante.

La présente invention a pour but d'élargir considérablement le domaine de longueur d'onde atteignable par la spectroscopie à distance afin de pouvoir analyser toutes les matières ciblées de manière plus efficace.

À cet effet, l'invention a pour objet un dispositif de spectroscopie à distance de type LIDAR comportant un module de génération d'un signal d'émission ; un module d'émission du signal d'émission vers une matière ciblée ; un module de réception d'un signal de réponse correspondant au signal d'émission réfléchi par la matière ciblée ; un module de post-traitement du signal de réponse pour déterminer une composition de la matière ciblée.

Le module de génération comporte au moins deux sources laser, chaque source laser étant apte à générer un signal laser à une longueur d'onde prédéterminée différente de la longueur d'onde de l'autre ou de chaque autre source laser ; un mélangeur amont apte à mélanger les signaux laser générés par les différentes sources laser pour former un signal complexe ; un premier modulateur apte à moduler le signal complexe à une première fréquence de modulation pour former le signal d'émission ; et un deuxième modulateur apte à moduler le signal complexe à une deuxième fréquence de modulation différente de la première fréquence de modulation, le module de génération comporte en outre un mélangeur aval apte à mélanger le signal complexe modulé par le premier modulateur et le signal complexe modulé par le deuxième modulateur pour former le signal d'émission.

Suivant d'autres aspects avantageux de l'invention, le dispositif comprend une ou plusieurs des caractéristiques suivantes, prise(s) isolément ou suivant toutes les combinaisons techniquement possibles :
- le module de post-traitement comporte un filtre principal apte à extraire du signal de réponse reçu des signaux élémentaires correspondant aux différentes longueurs d'onde prédéterminées ;
- le module de génération comporte en outre un séparateur du signal complexe ou du signal d'émission pour former un signal de référence destiné au module de post-traitement ;
- le module de post-traitement comporte en outre un filtre complémentaire apte à extraire du signal de référence des signaux élémentaires correspondant aux différentes longueurs d'onde prédéterminées ;
- la première fréquence de modulation est choisie en fonction de caractéristiques physiques de la matière ciblée ; et
- les longueurs d'onde prédéterminées sont choisies en fonction de caractéristiques physiques de la matière ciblée.

L'invention a également pour objet un procédé de spectroscopie à distance comportant les étapes suivantes :
- génération d'un signal d'émission ;
- émission du signal d'émission vers une matière ciblée ;
- réception d'un signal de réponse correspondant au signal d'émission réfléchi par la matière ciblée ;
- analyse du signal de réponse pour déterminer une composition de la matière ciblée.

L'étape de génération du signal d'émission comprend les sous-étapes suivantes :
- génération d'au moins deux signaux laser à des longueurs d'onde prédéterminées différentes ;
- mélange des signaux laser générés pour former un signal complexe ; et
- modulation du signal complexe à une première fréquence de modulation pour former le signal d'émission ; modulation du signal complexe à une deuxième fréquence de modulation pour former le signal d'émission ; et mélange des signaux complexes modulés à la première et à la deuxième fréquences de modulation pour former le signal d'émission.

Suivant d'autres aspects avantageux de l'invention, le procédé comprend une ou plusieurs des caractéristiques suivantes, prise(s) isolément ou suivant toutes les combinaisons techniquement possibles :
- l'étape d'analyse du signal de réponse comprend la sous-étape suivante :
   + extraction du signal de réponse reçu des signaux élémentaires correspondant aux différentes longueurs d'onde prédéterminées ;
- l'étape de génération du signal d'émission comprend en outre la sous-étape suivante :
   + séparation du signal d'émission pour former un signal de référence ;
- l'étape d'analyse du signal de réponse comprend en outre la sous-étape suivante :
   + extraction du signal de référence des signaux élémentaires correspondant aux différentes longueurs d'onde prédéterminées.

Ces caractéristiques et avantages de l'invention apparaitront à la lecture de la description qui va suivre, donnée uniquement à titre d'exemple non limitatif, et faite en référence aux dessins annexés sur lesquels :
- la figure 1 est une vue schématique d'un dispositif de spectroscopie à distance selon l'invention, le dispositif de spectroscopie à distance comportant notamment un module de génération et un module de post-traitement ;
- la figure 2 est une vue schématique du module de génération et du module de post-traitement de la figure 1 ; et
- la figure 3 est un organigramme d'un procédé de spectroscopie à distance selon l'invention, le procédé de spectroscopie à distance étant mis en œuvre par le dispositif de spectroscopie à distance de la figure 1.

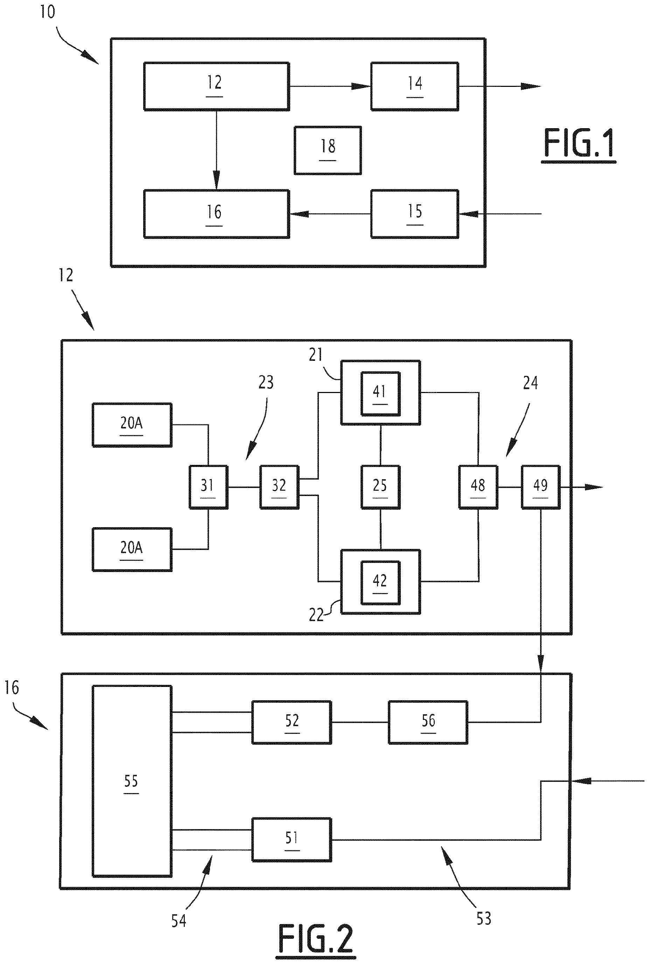

Le dispositif de spectroscopie 10 de la figure 1 est par exemple embarqué dans un satellite situé sur une orbite terrestre et effectuant des observations de la Terre, ou d'une autre planète, et notamment d'une couche d'atmosphère d'épaisseur égale par exemple à 15 km.

Le dispositif de spectroscopie 10 permet d'étudier une matière ciblée dans cette couche d'atmosphère. La matière ciblée est par exemple un gaz composé de plusieurs gaz élémentaires comme par exemple CO₂, H₂O ou CH₄.

Chaque gaz élémentaire est apte à absorber une onde lumineuse d'une fréquence déterminée avec un coefficient d'absorption connu a priori.

Ainsi, le dispositif de spectroscopie 10 permet par exemple de déterminer les masses volumiques des gaz élémentaires contenus dans le gaz ciblé en émettant un signal lumineux vers le gaz ciblé et en analysant un signal réfléchi par ce gaz, ou absorbé par lui et réfléchi par une surface en fond.

Selon une variante de réalisation, le dispositif de spectroscopie 10 est embarqué dans un autre véhicule spatial ou terrestre, ou encore un aéronef.

Selon encore une autre variante de réalisation, le dispositif de spectroscopie 10 est disposé de manière fixe par exemple sur la surface terrestre.

Dans au moins certaines des variantes de réalisation précitées, le dispositif de spectroscopie 10 permet d'étudier en outre une matière ciblée disposée dans tout milieu autre que l'atmosphère comme par exemple le milieu sous-marin ou sous-terrain.

En référence à la figure 1, le dispositif de spectroscopie 10 comporte un module de génération 12, un module d'émission 14, un module de réception 15, un module de post-traitement 16 et un module de pilotage 18.

Le module de génération 12 est apte à former un signal d'émission et un signal de référence destinés respectivement au module d'émission 14 et au module de post-traitement 16.

Le module d'émission 14 est un télescope d'émission connu en soi qui est apte à recevoir les signaux d'émission issus du module de génération 12 et à les émettre vers la matière ciblée.

Le module de réception 15 est un télescope de réception également connu en soi qui est apte à recevoir des signaux de réponse correspondant aux signaux d'émission émis par le module d'émission 14 et réfléchis par la matière ciblée ou une autre matière.

Selon une variante de réalisation, les télescopes des modules d'émission 14 et de réception 15 se présentent sous la forme d'un composant unique.

Le module de post-traitement 16 est apte à recevoir les signaux initiaux de référence générés par le module de génération 12 et les signaux de réponse reçus par le module de réception 15 et à analyser ces signaux pour déterminer la composition précise de la matière ciblée.

Le module de pilotage 18 permet de piloter le fonctionnement de l'ensemble des modules du dispositif de spectroscopie 10.

Le module de pilotage 18 est par exemple raccordé à un calculateur central (non représenté) du satellite à partir duquel, il est commandé.

Le module de génération 12 et le module de post-traitement 16 seront désormais expliqués plus en détail en référence à la figure 2.

Ainsi, comme cela est illustré sur cette figure 2, le module de génération 12 comporte deux sources laser 20A, 20B, deux voies optiques 21, 22 raccordées aux sources laser 20A, 20B par des moyens de guidage amont 23 et aux modules d'émission 14 et post-traitement 16 par des moyens de guidage aval 24, et un dispositif électronique 25 de gestion des voies optiques 21, 22.

Chaque source laser 20A, 20B est apte à générer un signal laser à une longueur d'onde prédéterminée, désignée respectivement par λ_{A} et λ_{B}. La longueur d'onde λ_{A} est différente de la longueur d'onde λ_{B}. Ces longueurs d'onde prédéterminées λ_{A}, λ_{B} sont par exemple choisies en fonction de caractéristiques physiques de la matière ciblée.

Les moyens de guidage amont 23 comprennent un mélangeur amont 31 et un séparateur amont 32 raccordés successivement par des guides d'onde, entre les sources laser 20A, 20B d'un côté et les voies optiques 21, 22 de l'autre.

En particulier, le mélangeur amont 31 est apte à mélanger les signaux laser générés par les différentes sources laser 20A, 20B pour former un signal complexe à sa sortie.

Le séparateur amont 32 est apte à diviser chaque signal complexe formé par le mélangeur amont 31 en deux parts égales destinées aux deux voies optiques 21, 22. Par la suite, chacune de ces parts sera désignée indifféremment par le terme « signal complexe ».

La voie optique 21, dite par la suite première voie optique, comporte un premier modulateur 41 apte à moduler le signal complexe passant par cette voie 21 pour former un premier signal modulé.

Le premier modulateur 41 est par exemple un modulateur électrooptique connu en soi permettant de générer un peigne fréquentiel en modulant le signal complexe correspondant à une première fréquence de modulation F₁ égale par exemple à 1 GHz. Ce peigne fréquentiel est alors compris dans le premier signal modulé.

La voie optique 22, dite par la suite deuxième voie optique, comporte un deuxième modulateur 42 apte à moduler le signal complexe passant par cette voie 22 pour former un deuxième signal modulé.

Tout comme le premier modulateur 41, le deuxième modulateur 42 est par exemple un modulateur électrooptique connu en soi permettant de générer un peigne fréquentiel en modulant le signal complexe correspondant à une deuxième fréquence de modulation F₂ égale par exemple à F₁+100 kHz. Ce peigne fréquentiel est alors compris dans le deuxième signal modulé.

Le dispositif électronique de gestion 25 permet de piloter le fonctionnement des modulateurs 41 et 42 selon des techniques connues en soi. Plus particulièrement, le dispositif électronique 25 est apte à générer un signal radiofréquence de fréquence F₁ pilotant le fonctionnement du premier modulateur 41 et un signal radiofréquence de fréquence F₂ pilotant le fonctionnement du deuxième modulateur 42.

Les moyens de guidage aval 24 comportent un mélangeur aval 48 et un séparateur aval 49 raccordés par des guides d'onde, successivement entre les voies optiques 21, 22 d'un côté et les modules d'émission 14 et de post-traitement 16 de l'autre.

En particulier, le mélangeur aval 48 permet de former un signal composé du premier signal modulé issu de la première voie optique 21 et du deuxième signal modulé issu de la deuxième voie optique 22. Le mélangeur aval 48 fait ainsi battre ensemble les peignes générés par ces différentes voies et génère alors un interférogramme.

Le séparateur aval 49 permet de séparer le signal composé issu du mélangeur aval 48 en une part faible et une part forte, par exemple en proportion 10%:90%. La part faible forme le signal de référence destiné au module de post-traitement 16 et la part forte forme le signal d'émission destiné au module d'émission 14. Chacun du signal de référence et du signal d'émission comprend alors un interférogramme.

Le module de post-traitement 16 comprend un filtre principal 51, un filtre complémentaire 52, des moyens de guidage amont 53, des moyens de guidage aval 54 et une unité de traitement 55.

Les moyens de guidage amont 53 présentent des guides d'onde raccordant les filtres principal 51 et complémentaire 52 respectivement aux modules de réception 15 et de génération 12.

En particulier, les moyens de guidage amont 53 permettent de transmettre chaque signal de réponse issu du module de réception 15 vers le filtre principal 51 et chaque signal de référence issu du module de génération 12 vers le filtre complémentaire 52.

Selon un exemple de réalisation de l'invention, les moyens de guidage amont 53 comprennent un retardateur 56 disposé dans les guides d'onde entre le module de génération 12 et le filtre complémentaire 52. Ce retardateur permet de retarder la transmission du signal de référence par rapport au signal d'émission afin de synchroniser ce signal de référence avec le signal de réponse correspondant.

Le filtre principal 51 est apte à extraire du signal de réponse correspondant des signaux élémentaire ayant différentes longueur d'onde.

Ainsi, dans l'exemple décrit, le filtre principal 51 est apte à extraire de chaque signal de réponse reçu deux signaux élémentaires, à savoir un signal élémentaire de longueur d'onde λ_{A} et un signal élémentaire de longueur d'onde λ_{B}.

De manière analogue, le filtre complémentaire 52 est apte à extraire de chaque signal de référence deux signaux élémentaires, à savoir un signal élémentaire de longueur d'onde λ_{A} et un signal élémentaire de longueur d'onde λ_{B}.

Les moyens de guidage aval 54 présentent des guides d'onde raccordant les filtres 51, 52 à l'unité de traitement 55. Ces guides d'onde forment pour chaque filtre 51, 52, une voie optique de transmission séparée pour chaque signal élémentaire issu du filtre correspondant.

Ainsi, dans l'exemple décrit, ces guides d'onde forment des voies optiques de transmission pour chaque filtre 51, 52.

Finalement, l'unité de traitement 55 est apte à recevoir l'ensemble des signaux élémentaires transmis via les moyens de guidage aval 54 pour déterminer la composition précise de la matière ciblée à plusieurs longueurs d'onde. Ceci est effectué en comparant notamment les spectres, calculés par transformées de Fourier des interférogrammes contenus dans les signaux élémentaires issus du signal de référence et dans le signal de réception.

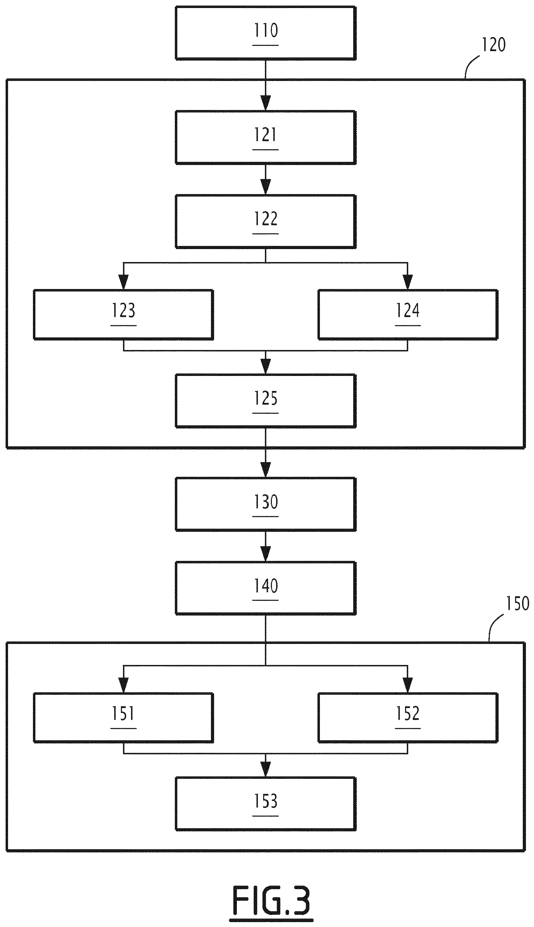

Le procédé de spectroscopie à distance mis en œuvre par le dispositif de spectroscopie 10 sera désormais expliqué en référence à la figure 3 illustrant un organigramme de ses étapes.

Initialement, la matière ciblée est déterminée et les modules d'émission 14 et de réception 15 sont configurés pour respectivement émettre un signal d'émission vers cette matière et recevoir un signal de réponse réfléchi par cette matière.

Lors de l'étape 110, le module de pilotage 18 commande la génération d'un signal d'émission par le module génération 12.

Lors de l'étape 120 suivante, le module de génération 12 génère alors un signal d'émission destiné au module d'émission 14 et un signal de référence destiné au module de post-traitement 16.

Cette étape 120 comprend plusieurs sous-étapes.

Lors de la sous-étape initiale 121, les deux sources lasers 20A, 20B génèrent deux signaux laser à des longueurs d'onde λ_{A} et λ_{B}.

Lors de la sous-étape 122 suivante, le mélangeur amont 31 mélange les deux signaux laser générés pour former un signal complexe. Ce signal complexe est ensuite divisé en deux parts égales par le séparateur amont 32.

Lors de la sous-étape 123 suivante, le signal complexe passant par la première voie optique 21 est modulé à la première fréquence de modulation F₁.

Lors de la sous-étape 124 mise en œuvre en parallèle avec la sous-étape 123, le signal complexe passant par la deuxième voie optique 21 est modulé à la deuxième fréquence de modulation F₂.

Lors de la sous-étape 125 suivante, le mélangeur aval 48 mélange les signaux modulés issus des voies optiques 21, 22 et le séparateur aval 49 divise le signal issu du mélangeur 48 pour former un signal d'émission et un signal de référence.

Lors de l'étape 130 mise en œuvre après l'étape 120, le module d'émission 15 émet le signal d'émission vers la matière ciblée.

Lors de l'étape 140 suivante, le module de réception 15 reçoit un signal de réponse correspondant au signal d'émission réfléchi par la matière ciblée.

Lors de l'étape 150 suivante, le module de post-traitement 16 analyse le signal de réponse et le signal de référence pour déterminer la composition précise de la matière ciblée.

En particulier, l'étape 150 comprend plusieurs sous-étapes.

Lors de la sous-étape 151, le filtre principal 51 reçoit le signal de réponse reçu par le module de réception 15 et en extrait deux signaux élémentaires aux longueurs d'onde λ_{A} et λ_{B}.

Lors de la sous-étape 152 mise en œuvre en parallèle avec la sous-étape 151, le filtre complémentaire 52 reçoit le signal de référence retardé, et en extrait deux signaux élémentaires aux longueurs d'onde λ_{A} et λ_{B}.

Lors de la sous-étape 153 suivante, les filtres principal 51 et complémentaire 52 transmettent l'ensemble des signaux élémentaires à l'unité de traitement qui les analyse alors pour déterminer la composition précise de la matière ciblée.

Ainsi, le dispositif de spectroscopie et le procédé de spectroscopie mis en œuvre par ce dispositif, permettent de mettre en œuvre une analyse de la matière ciblée plus complète en utilisant simultanément une spectroscopie à plusieurs longueurs d'onde. On conçoit alors que ceci permet d'augmenter la qualité de la spectroscopie pour différentes matières ciblées.

Par ailleurs, il est clair que l'invention ne se limite pas à l'architecture du dispositif de spectroscopie décrite précédemment. En particulier, toute architecture connue intégrant en outre plusieurs sources laser à différentes longueurs d'onde conformément à l'invention, peut être utilisée pour mettre en œuvre l'invention.

Ainsi, dans l'architecture décrite ci-dessus, il est possible de supprimer le mélangeur aval 48 afin de raccorder la deuxième voie optique 22 directement au filtre complémentaire 52 du module de post-traitement 16. Dans ce cas, seul le peigne généré par la première voie optique 21 est émis vers la matière ciblée alors que le peigne généré par la deuxième voie optique 22 est transmis directement au module de post-traitement 16 dans le signal de référence.

À l'inverse, lorsque le mélangeur aval 48 est utilisé, il est possible de supprimer complètement la transmission d'un signal de référence vers le module de post-traitement 16. Dans ce cas, le battement des deux peignes générés à des fréquences différentes dans le signal d'émission, est suffisant pour déterminer la composition précise de la matière ciblée.

Finalement, il est possible de prévoir un nombre de sources laser strictement supérieur à deux pour couvrir un domaine de longueur d'onde plus important. Bien entendu, dans ce cas, le filtre principal et éventuellement, le filtre complémentaire doivent être adaptés pour extraire autant de signaux élémentaires à des longueurs d'onde différentes que des sources laser.

## Revendications

1. Dispositif (10) de spectroscopie à distance de type LIDAR comportant :
- un module de génération (12) d'un signal d'émission ;
- un module d'émission (14) du signal d'émission vers une matière ciblée ;
- un module de réception (15) d'un signal de réponse correspondant au signal d'émission réfléchi par la matière ciblée ;
- un module de post-traitement (16) du signal de réponse pour déterminer une composition de la matière ciblée ;
le dispositif (10) étant **caractérisé en ce que** le module de génération (12) comporte :
- au moins deux sources laser (20A, 20B), chaque source laser (20A, 20B) étant apte à générer un signal laser à une longueur d'onde (λ_{A}, λ_{B}) prédéterminée différente de la longueur d'onde de l'autre ou de chaque autre source laser (20A, 20B) ;
- un mélangeur amont (31) apte à mélanger les signaux laser générés par les différentes sources laser (20A, 20B) pour former un signal complexe ;
- un premier modulateur (41) apte à moduler le signal complexe à une première fréquence de modulation (F1) pour former le signal d'émission ; et
- un deuxième modulateur (42) apte à moduler le signal complexe à une deuxième fréquence de modulation (F2) différente de la première fréquence de modulation (F1),
dans lequel le module de génération (12) comporte en outre un mélangeur aval (48) apte à mélanger le signal complexe modulé par le premier modulateur (41) et le signal complexe modulé par le deuxième modulateur (42) pour former le signal d'émission.

2. Dispositif (10) selon la revendication 1, dans lequel le module de post-traitement (16) comporte un filtre principal (51) apte à extraire du signal de réponse reçu des signaux élémentaires correspondant aux différentes longueurs d'onde (λ_{A}, λ_{B}) prédéterminées.

3. Dispositif (10) selon la revendication 1 ou 2, dans lequel le module de génération (12) comporte en outre un séparateur (32, 49) du signal complexe ou du signal d'émission pour former un signal de référence destiné au module de post-traitement (16).

4. Dispositif (10) selon la revendication 3, dans lequel le module de post-traitement (16) comporte en outre un filtre complémentaire (52) apte à extraire du signal de référence des signaux élémentaires correspondant aux différentes longueurs d'onde (λ_{A}, λ_{B}) prédéterminées.

5. Dispositif (10) selon l'une quelconque des revendications précédentes, dans lequel la première fréquence de modulation (F1) est choisie en fonction de caractéristiques physiques de la matière ciblée.

6. Dispositif (10) selon l'une quelconque des revendications précédentes, dans lequel les longueurs d'onde prédéterminées (λ_{A}, λ_{B}) sont choisies en fonction de caractéristiques physiques de la matière ciblée.

7. Procédé de spectroscopie à distance comportant les étapes suivantes :
- génération (120) d'un signal d'émission ;
- émission (130) du signal d'émission vers une matière ciblée ;
- réception (140) d'un signal de réponse correspondant au signal d'émission réfléchi par la matière ciblée ;
- analyse (150) du signal de réponse pour déterminer une composition de la matière ciblée ;
le procédé étant **caractérisé en ce que** l'étape de génération (120) du signal d'émission comprend les sous-étapes suivantes :
- génération (121) d'au moins deux signaux laser a des longueurs d'onde prédéterminées (λ_{A}, λ_{B}) différentes ;
- mélange (122) des signaux laser générés pour former un signal complexe ;-modulation (123) du signal complexe à une première fréquence de modulation (F1) pour former le signal d'émission ;
- modulation (124) du signal complexe à une deuxième fréquence de modulation (F2) différente de la première fréquence de modulation (F1) pour former le signal d'émission ; et
- mélange (125) des signaux complexes modulés à la première et à la deuxième fréquences de modulation pour former le signal d'émission.

8. Procédé selon la revendication 7, dans lequel l'étape d'analyse (150) du signal de réponse comprend la sous-étape suivante :
- extraction (151) du signal de réponse reçu des signaux élémentaires correspondant aux différentes longueurs d'onde (λ_{A}, λ_{B}) prédéterminées.

9. Procédé selon la revendication 8, dans lequel l'étape de génération (120) du signal d'émission comprend en outre la sous-étape suivante :
- séparation (125) du signal d'émission pour former un signal de référence ; et
- dans lequel l'étape d'analyse (150) du signal de réponse comprend en outre la sous-étape suivante :
- extraction (152) du signal de référence des signaux élémentaires correspondant aux différentes longueurs d'onde (λ_{A}, λ_{B}) prédéterminées.

## Patentansprüche

1. Vorrichtung (10) für Telespektroskopie vom Typ LIDAR, Folgendes umfassend:
- ein Modul für das Erzeugen (12) eines Emissionssignals;
- ein Modul für die Emission (14) des Emissionssignals zu einer Zielmaterie;
- ein Modul für den Empfang (15) eines Antwortsignals, dem von der Zielmaterie reflektierten Emissionssignal entsprechend;
- ein Modul für die Nachbehandlung (16) des Antwortsignals zum Bestimmen einer Zusammensetzung der Zielmaterie;
wobei die Vorrichtung (10) **dadurch gekennzeichnet ist, dass** das Modul für die Erzeugung (12) Folgendes umfasst:
- wenigstens zwei Laserquellen (20A, 20B), wobei jede Laserquelle (20A, 20B) in der Lage ist, ein Lasersignal mit einer vorher festgelegten Wellenlänge (λ_{A}; λ_{B}) zu erzeugen, die sich von der Wellenlänge der anderen oder jeder anderen Laserquelle (20A, 20B) unterscheidet;
- ein vorgelagerter Vermischer (31), in der Lage, die von den verschiedenen Laserquellen (20A, 20B) erzeugten Lasersignale zu mischen, um ein komplexes Signal zu bilden;
- einen ersten Modulator (41), in der Lage, das komplexe Signal mit einer ersten Modulationsfrequenz (F1) zu modulieren, um das Emissionssignal zu bilden; und
- einen zweiten Modulator (42), in der Lage, das komplexe Signal mit einer zweiten Modulationsfrequenz (F2) zu modulieren, die sich von der ersten Modulationsfrequenz (F1) unterscheidet,
in welcher das Modul für die Erzeugung (12) weiter einen nachgelagerten Vermischer (48) umfasst, in der Lage, das von dem ersten Modulator (41) modulierte komplexe Signal und das von dem zweiten Modulator (42) modulierte komplexe Signal zu mischen, um das Emissionssignal zu bilden.

2. Vorrichtung (10) gemäß Anspruch 1, in welchem das Modul für die Nachbehandlung (16) einen Hauptfilter (51) umfasst, in der Lage, das Antwortsignal zu extrahieren, empfangen aus den elementaren Signalen, den verschiedenen vorher festgelegten Wellenlängen (λ_{A}; λ_{B}) entsprechend.

3. Vorrichtung (10) nach Anspruch 1 oder 2, in welcher das Modul für die Erzeugung (12) weiter einen Separator (32, 49) des komplexen Signals oder des Emissionssignals umfasst, um ein Referenzsignal zu bilden, bestimmt für das Modul für die Nachbehandlung (16).

4. Vorrichtung (10) nach Anspruch 3, in welcher das Modul für die Nachbehandlung (16) weiter einen komplementären Filter (52) umfasst, in der Lage, aus dem Referenzsignal die elementaren Signale entsprechend den verschiedenen vorher festgelegten Wellenlängen (λ_{A}, λ_{B}) zu extrahieren.

5. Vorrichtung (10) nach einem der vorhergehenden Ansprüche, in welcher die erste Modulierungsfrequenz (F1) gemäß der physischen Merkmale der Zielmaterie ausgewählt wird.

6. Vorrichtung (10) nach einem der vorhergehenden Ansprüche, in welcher die vorher festgelegten Wellenlängen (λ_{A}, λ_{B}) gemäß der physischen Merkmale der Zielmaterie ausgewählt sind.

7. Verfahren für Telespektroskopie, umfassend die folgenden Schritte:
- Erzeugen (120) eines Emissionssignals;
- Emission (130) des Emissionssignals zu einer Zielmaterie;
- Empfangen (140) eines Antwortsignals, dem von der Zielmaterie reflektierten Emissionssignal entsprechend;
- Analyse (150) des Antwortsignals zum Bestimmen einer Zusammensetzung der Zielmaterie;
wobei das Verfahren **dadurch gekennzeichnet ist, dass** der Schritt der Erzeugung (120) des Emissionssignals die folgenden Unterschritte umfasst:
- Erzeugen (121) von wenigstens zwei Lasersignalen mit verschiedenen vorher festgelegten Wellenlängen (λ_{A}, λ_{B});
- Mischen (122) der erzeugten Lasersignale, um ein komplexes Signal zu bilden;
- Modulation (123) des komplexen Signals bei einer ersten Modulationsfrequenz (F1), um das Emissionssignal zu bilden;
- Modulation (124) des komplexen Signals mit einer zweiten Modulationsfrequenz (F2), die sich von der ersten Modulationsfrequenz (F1) unterscheidet, um das Emissionssignal zu bilden; und
- Mischen (125) der komplexen Signale, moduliert mit der ersten und der zweiten Modulationsfrequenz, um das Emissionssignal zu bilden.

8. Verfahren nach Anspruch 7, in welchem der Schritt der Analyse (150) des Antwortsignals den folgenden Unterschritt umfasst:
- Extraktion (151) des empfangenen Antwortsignals aus den elementaren Signalen entsprechend den verschiedenen vorher festgelegten Wellenlängen (λ_{A}, λ_{B}).

9. Verfahren nach Anspruch 8, in welchem der Schritt der Erzeugung (120) des Emissionssignals weiter den folgenden Unterschritt umfasst:
- Trennung (125) des Emissionssignals, um ein Referenzsignal zu bilden; und
- in welchem der Schritt der Analyse (150) des Antwortsignals weiter den folgenden Unterschritt umfasst:
- Extraktion (152) des Referenzsignals aus den elementaren Signalen, den verschiedenen vorher festgelegten Wellenlängen (λ_{A}, λ_{B}) entsprechend.

## Claims

1. A LIDAR type remote spectroscopy device (10) including:
- a module (12) for generating an emission signal;
- a module (14) for emitting the emission signal towards a targeted material;
- a module (15) for receiving a response signal corresponding to the emission signal reflected by the targeted material;
- a module (16) for post-processing the response signal to determine a composition of the targeted material;
the device (10) being **characterized in that** the generation module (12) includes:
- at least two laser sources (20A, 20B), each laser source (20A, 20B) being capable of generating a laser signal at a predetermined wavelength (λ_{A}, λ_{B}) different from the wavelength of the other or of each other laser source (20A, 20B);
- an upstream mixer (31) capable of mixing the laser signals generated by the different laser sources (20A, 20B) to form a complex signal;
- a first modulator (41) capable of modulating the complex signal at a first modulation frequency (F1) to form the emission signal; and
- a second modulator (42) capable of modulating the complex signal at a second modulation frequency (F2) different from the first modulation frequency (F1),
wherein the generation module (12) further includes a downstream mixer (48) capable of mixing the complex signal modulated by the first modulator (41) and the complex signal modulated by the second modulator (42) to form the emission signal.

2. The device (10) according to claim 1, wherein the post-processing module (16) includes a main filter (51) capable of extracting, from the received response signal, elementary signals corresponding to the different predetermined wavelengths (λ_{A}, λ_{B}).

3. The device (10) according to claim 1 or 2, wherein the generation module (12) further includes a divider (32, 49) of the complex signal or of the emission signal to form a reference signal intended for the post-processing module (16).

4. The device (10) according to claim 3, wherein the post-processing module (16) further includes a complementary filter (52) capable of extracting, from the reference signal, elementary signals corresponding to the different predetermined wavelengths (λ_{A}, λ_{B}).

5. The device (10) according to any one of the preceding claims, wherein the first modulation frequency (F1) is selected according to the physical characteristics of the targeted material.

6. The device (10) according to any one of the preceding claims, wherein the predetermined wavelengths (λ_{A}, λ_{B}) are selected according to physical characteristics of the targeted material.

7. A remote spectroscopy method including the following steps:
- generation (120) of an emission signal;
- emission (130) of the emission signal towards a targeted material;
- reception (140) of a response signal corresponding to the emission signal reflected by the targeted material;
- analysis (150) of the response signal to determine a composition of the targeted material;
the method being **characterized in that** the step of generating (120) the emission signal comprises the following sub-steps:
- generation (121) of at least two laser signals at different predetermined wavelengths (λ_{A}, λ_{B});
- mixing (122) of the generated laser signals to form a complex signal;
- modulation (123) of the complex signal at a first modulation frequency (F1) to form the emission signal;
- modulation (124) of the complex signal at a second modulation frequency (F2) different from the first modulation frequency (F1) to form the emission signal; and
- mixing (125) of the complex signals modulated at the first and second modulation frequencies to form the emission signal.

8. The method according to claim 7, wherein the step of analyzing (150) the response signal comprises the following sub-step:
- extraction (151), from the received response signal, of the elementary signals corresponding to the different predetermined wavelengths (λ_{A}, λ_{B}).

9. The method according to claim 8, wherein the step of generating (120) the emission signal further comprises the following sub-step:
- separation (125) of the emission signal to form a reference signal; and
- wherein the step of analyzing (150) the response signal further comprises the following sub-step:
- extraction (152), from the reference signal, of the elementary signals corresponding to the different predetermined wavelengths (λ_{A}, λ_{B}).
